# EUROPÄISCHE PATENTSCHRIFT

(11) **EP 1 806 300 B1**
(45) Veröffentlichungstag und Bekanntmachung des Hinweises auf die Patenterteilung: **05.10.2011**
(21) Anmeldenummer: 06000202.9
(22) Anmeldetag: 05.01.2006
(51) Int. Cl.: B65G 1/04

(54) **Vorrichtung für ein Verlagern von Waren**
Article transfer device
Dispositif de transfert d'articles

(43) Veröffentlichungstag der Anmeldung: 11.07.2007
(73) Patentinhaber: von Liechtenstein, Alexander, 9497 Triesenberg (LI)
(72) Erfinder: von Liechtenstein, Alexander, 9497 Triesenberg (LI)
(74) Vertreter: Grünecker, Kinkeldey, Stockmair & Schwanhäusser Anwaltssozietät

(56) Entgegenhaltungen:
- EP-A- 1 106 267
- DE-A1- 4 135 912
- DE-A1- 19 834 927
- US-A- 6 135 697

## Beschreibung

Die vorliegende Erfindung bezieht sich auf eine Vorrichtung für ein Verlagern von Waren gemäß dem Oberbegriff des Anspruchs 1.

Eine solche Vorrichtung, die aus der Praxis bekannt ist, findet Verwendung in automatisierten Lagersystemen, beispielsweise Hochregallagern. Solche Lagersysteme stellen Lagerflächen zur Verfügung, auf denen Waren abgelegt und gelagert werden können. Um dieses Lagersystem automatisiert betreiben zu können, ist eine bewegliche und ansteuerbare Vorrichtung zum Verlagern von Waren vorgesehen, insbesondere also zum Ein-, Aus- und/oder Umlagern von Waren. Mittels dieser Vorrichtung können die Waren an beliebige Stellen innerhalb des Lagersystems gebracht, dort abgelegt und zu einem späteren Zeitpunkt wieder von dort entnommen werden.

Das Dokument DE 198 34 927 bezieht sich auf ein Verfahren und eine Vorrichtung zum Ein- und Auslagern von Stückgut in ein Hochregallager. Zu diesem Zweck ist eine Ein- und Auslagerungsvorrichtung mit einer Greif-/ Zieheinheit vorgesehen, die ein Stückgut auf einen Tisch (Plattform) ziehen und von dort wieder herunterschieben kann. Die Verlagerungsvorrichtung der Greifeinheit ist über eine Drehachse verstellbar.

Zum Verlagern der Waren sind für solche Lagersysteme ebenfalls aus der Praxis Vorrichtungen bekannt, die mindestens zwei parallel nebeneinander liegende, gegebenenfalls auch zueinander höhenversetzte Lagerflächen bedienen können. Zu diesem Zweck befindet sich zwischen den beiden parallel zueinander liegenden Lagerflächen ein Gang, in dem die Verlagerungsvorrichtung verfahrbar ist. Sie weist einen Tisch auf, auf dem zu verlagernde Ware abgelegt werden kann. Die Verlagerungsvorrichtung und damit auch ihr Tisch können über die gesamte Länge und die gesamte Höhe des Ganges verfahrbar sein. Über eine Kante des Tisches werden die Waren auf den Tisch bewegt. Wenn die Kante an der Lagerfläche auf der einen Seite des Ganges anliegt, können die Waren über dieselbe Kante auf die Lagerfläche bewegt werden. Um auch die Lagerfläche auf der anderen Seite des Ganges über dieselbe Tischkante bedienen zu können, ist der Tisch um 180° um eine vertikal ausgerichtete Schwenkachse schwenkbar. Nach dem Verschwenken um 180° liegt die Tischkante, über die das Bewegen der Waren stattfindet, an der anderen Lagerfläche an. Über die Tischkante kann nun eine Wäre entweder vom Tisch auf die Lagerfläche oder in umgekehrter Richtung verlagert werden.

Nachteilig an der bekannten Verlagerungsvorrichtung ist, dass sie häufig vergleichsweise viel Raum einnimmt, der durch den Gang bereitgestellt werden muss und somit für das Lagern der Waren nicht mehr zur Verfügung steht.

Aufgabe der vorliegenden Erfindung ist es, die bekannte Vorrichtung zum Verlagern von Waren mit konstruktiv möglichst einfachen Mitteln dahingehend zu verbessern, dass ihre Bedienung vereinfacht wird und darüber hinaus mehr Platz zum Lagern der Waren zur Verfügung steht.

Bereitgestellt werden soll darüber hinaus auch ein geeignetes Verfahren zum Betreiben eines entsprechenden Lagersystems.

Diese Aufgabe wird gelöst durch eine Vorrichtung mit den Merkmalen des Anspruchs 1 bzw. durch ein Verfahren mit den Merkmalen des Anspruchs 14.

Wie oben ausführlich erläutert, erfolgt bei der herkömmlichen Vorrichtung zum Verlagern von Waren das Be- und Entladen des Tisches stets über ein und dieselbe Tischkante. Daher muss dieser herkömmliche Tisch um 180° geschwenkt werden, wenn er zwei parallel zueinander verlaufende Lagerflächen bedienen können soll. Von diesem Konzept unterscheidet sich die vorliegende Erfindung grundlegend, indem sie das Be- und Entladen des Tisches der Verlagerungsvorrichtung über zwei unterschiedliche Tischkanten ermöglicht. In seiner einen Endstellung kann der Tisch mit seiner ersten Tischkante bündig an einer ersten Lagerfläche anliegen. Über diese erste Tischkante kann die Waren dann vom Tisch auf die Lagerfläche oder in umgekehrter Richtung verlagert werden. Soll nun die gegenüberliegende Lagerfläche bedient werden, so muss der Tisch der erfindungsgemäßen Vorrichtung nicht mehr um 180° verschwenkt werden, wie dies im Stand der Technik nötig war. Vielmehr genügt es, den Tisch um etwa den gleichen Winkel wie den zwischen den beiden Tischkanten eingenommenen Winkel zu verschwenken. Bei passend gewählter Breite des Ganges liegt der Tischen nach diesem Schwenken mit seiner zweiten Tischkante bündig an der zweiten Lagerfläche an, so dass die Ware nun vom Tisch auf die Lagerfläche oder in umgekehrter Richtung verlagert werden kann.

Ein Vorteil der Erfindung liegt darin, dass der Tisch zwischen den beiden gegenüberliegenden Lagerflächen um deutlich weniger als 180° verschwenkt werden muss. Die Schwenkbewegung kann daher schneller durchgeführt werden als bisher, so dass beim erfindungsgemäßen Lagersystem mit höherer Frequenz Waren ein-, aus- oder umgelagert werden können. Ein mindestens ebenso großer Vorteil der Erfindung besteht darin, dass bei der Schwenkbewegung des Tisches deutlich weniger Raum beansprucht wird als bei einer herkömmlichen 180°-Schwenkbewegung. Entsprechend sinkt der Raumbedarf für den Gang zwischen den Lagerflächen. Umgekehrt steigt das zum Lagern der Waren zur Verfügung stehende Raumangebot, so dass also in das erfindungsgemäße Lagersystem deutlich mehr Waren eingelagert werden können als in herkömmliche Systeme. Sowohl durch die schnellere Bedienbarkeit, als auch durch die erhöhte Lagerkapazität senkt das erfindungsgemäße Lagersystem die Lagerkosten erheblich.

Der zwischen den beiden Tischkanten, über die das Verlagern der Waren erfolgt, eingenommene Winkel beträgt beispielsweise zwischen 40° und 140°. Mit einer Abweichung von +/- 10° entspricht der Schwenkwinkel zwischen den beiden Endstellungen des Tisches dann diesem zwischen den Tischkanten eingenommenen Winkel. In einer besonders günstigen Variante betragen die beiden Winkel jeweils etwa 90°. Der Tisch verfügt somit also über zwei Tischkanten, die im rechten Winkel einander ausgerichtet sind. Über eine Schwenkbewegung um 90° kann dieser Tisch von einer Lagerfläche zu einer gegenüberliegenden, parallel ausgerichteten Lagerfläche verfahren werden. Eine solche Variante ist besonders vorteilhaft bei quaderförmigen Verpackungen, denn so liegt stets eine Seite der Verpackung parallel zur Kante des Tisches, über die die Ware verlagert wird. Diese Seite der Verpackung kann dann als Angriffsfläche für Verlagerungseinrichtungen dienen, die für das Verlagern der Ware vom Tisch auf die Lagerfläche oder in umgekehrter Richtung sorgen. Handelt es sich hingegen nicht um quaderförmige Waren, so kann die erfindungsgemäße Vorrichtung auch bei nichtrechtwinkligen Tischkantenwinkeln und Schwenkwinkeln ebenso erfolgreich betrieben werden.

In einer vergleichsweise einfachen Variante der Erfindung hat Tisch nicht nur zwei rechtwinklig zueinander stehende Tischkanten, sondern insgesamt eine im Wesentlichen rechteckige Form.

Vorteilhaft ist es, wenn die Schwenkachse am Rand des Tisches oder außerhalb des Tisches angeordnet ist. Auf diese Weise kann sichergestellt werden, dass die zum Verlagern dienende Tischkante möglichst dicht an die ihr zugeordnete Lagerfläche herangefahren werden kann, ohne dass die Gefahr besteht, dass die Tischkante und die Lagerfläche miteinander kollidieren. Alternativ dazu konnte der gleiche Effekt erzielt werden, indem sichergestellt wird, dass der Tisch stets in einer Ebene leicht oberhalb oder leicht unterhalb der Lagerfläche geschwenkt wird, um ebenfalls eine Kollision auszuschließen.

Bei dieser Variante sollte sich der Tisch leicht oberhalb der Lagerfläche befinden, wenn die Ware vom Tisch auf die Lagerfläche verlagert werden soll. Umgekehrt sollte sich der Tisch leicht unterhalb der Lagerfläche befinden, wenn die Ware von der Lagerfläche auf den Tisch verlagert werden soll.

Um den zum Schwenken benötigten Raum möglichst klein zu halten, sollte die Schwenkachse bevorzugt nahe oder in einer Ecke des Tisches angeordnet sein. Je kleiner auf diese Weise der zum Schwenken benötigte Raum wird, desto mehr Platz steht zum Lagern der Waren zur Verfügung.

Erfindungsgemäß ist eine Verlagerungseinrichtung vorgesehen, die von der Schwenkbewegung des Tisches unabhängig oder entkoppelt ist. Dies hat Vorteile für die Geschwindigkeit, mit der Waren verlagert werden können. Weil weniger Teile der Voran der Schwenkbewegung des Tisches teilnehmen, kann das Verschwenken schneller durchgeführt werden, so dass auch das Verlagern der Waren beschleunigt wird.

Günstig ist es, wenn die erfindungsgemäße Vorrichtung zwei Verlagerungseinrichtungen zum Verlagern einer Ware aufweist, wobei jede Verlagerungseinrichtung einen Einrichtungskopf aufweist, vor dem eine Ware auf dem Tisch positionierbar ist. Diese Verlagerungseinrichtungen können dann die Funktion übernehmen, das eigentliche Verlagern der Waren vom Tisch auf die Lagerfläche oder in umgekehrter Richtung zu bewirken.

Wenn zwei Verlagerungseinrichtungen vorgesehen sind, so besteht die Möglichkeit, dass eine der beiden an die Schwenkbewegung des Tisches gekoppelt ist, während die andere von der Schwenkbewegung des Tisches unabhängig ist.

Zu diesem Zweck hat jede Verlagerungseinrichtung vorzugsweise eine Verlagerungsrichtung, in der ihr Einrichtungskopf bewegbar ist, und in der somit auch die Ware verlagert wird. Dies kann bedeuten, dass die Ware lediglich in der einer einzigen Richtung verlagert werden kann, beispielsweise nur vom Tisch weg oder auf den Tisch hin. Generell ist jedoch mit "Verlagerungsrichtung" die Möglichkeit gemeint, die Ware in positiver oder in negativer Richtung zu bewegen. Mit anderen Worten kann also eine Verlagerungseinrichtung mit einer bestimmten "Verlagerungsrichtung" die Ware entweder in eine bestimmte Richtung vom Tisch wegbewegen oder die Ware in genau umgekehrter Richtung auf den Tisch heraufbewegen.

Es hat sich als sehr vorteilhaft erwiesen, wenn eine Veriagerungseinrichtung vorgesehen ist, die an die Schwenkbewegung des Tisches gekoppelt ist. Bei geeigneter Ausbildung könnte diese Verlagerungseinrichtung die Ware während der Schwenkbewegung des Tisches festhalten, um auf diese Weise zu verhindern, dass die Ware beim Schwenken unbeabsichtigt vom Tisch herabfällt.

Denkbar ist es, dass mindestens eine Verlagerungseinrichtung eine Vorrichtung zum temporären Fixieren einer Ware aufweist. Möglich wäre es, dafür eine Greifvorrichtung vorzusehen. Besonders geeignet ist jedoch eine Ansaugvorrichtung, mit der eine Ware angesaugt und festgehalten werden kann.

Besonders günstig ist es, wenn sich die Verlagerungsrichtungen von zwei Verlagerungseinrichtungen in zumindest einer Endstellung des Tisches über dem Tisch kreuzen. Dies ermöglicht es, die Ware zunächst mittels der einen Verlagerungseinrichtung zu verlagern und sie dann senkrecht dazu von der zweiten Verlagerungseinrichtung bewegen zu lassen. Wenn die eine der beiden Verlagerungseinrichtungen an der Schwenkbewegung des Tisches teilnimmt, so können die beiden Verlagerungsrichtungen in der anderen Endstellung des Tisches auch parallel zueinander ausgerichtet sein.

Neben der Vorrichtung zum Verlagern der Waren als solcher umfasst die Erfindung auch ein Lagersystem zum Lagern von Waren, bei dem wenigstens eine Lagerfläche zum Lagern von Waren sowie mindestens eine erfindungsgemäße Verlagerungsvorrichtung vorgesehen sind.

Besondere Vorteile hat die Erfindung dann, wenn bei diesem Lagersystem wenigstens zwei Lagerflächen mit parallel zueinander ausgerichteten Lagerflächenflanken vorgesehen ist und der Tisch der Verlagerungsvorrichtung in seiner ersten Endstellung etwa bündig mit der Flanke der einen Lagerfläche und in seiner zweiten Endstellung etwa bündig mit der Flanke der anderen Lagerfläche positioniert ist. Bei einem solchen bündigen Abschluss kann das Verlagern der Waren besonders reibungslos durchgeführt werden.

Die Erfindung umfasst ferner auch ein Verfahren zum Betreiben eines Lagersystems. Das Verfahren zeichnet sich dadurch aus, dass eine auf dem Tisch einer Verlagerungsvorrichtung befindliche Ware während einer Schwenkbewegung des Tisches von einer gemeinsam mit dem Tisch verschwenkenden Verlagerungseinrichtung festgehalten, anschließendschließend losgelassen und mittels der Verlagerungseinrichtung verlagert wird, die von der Schwenkbewegung des Tisches unabhängig ist. Das Festhalten der Ware während der Schwenkbewegung hat den Vorteil, dass die Ware während des Verschwenkens nicht vom Tisch herunterfallen kann. Die Übergabe an eine andere Verlagerungseinrichtung ermöglicht das Verlagern der Waren in unterschiedlichen Raumrichtungen.

Ein bevorzugtes Ausführungsbeispiel der vorliegenden Erfindung wird nun anhand der beigefügten Zeichnung näher beschrieben. Im Einzelnen zeigen
- Fig. 1: eine Draufsicht auf einen Ausschnitt eines Lagersystems mit einer erfin- dungsgemäßen Vertagerungsvorrichtung,
- Fig. 2: einen Vertikalschnitt durch das in Fig. 1 gezeigte System in der in Fig. 1 mit II-II bezeichneten Ebene und
- Fig. 3: einen weiteren Vertikalschnitt durch das in Fig. 1 gezeigte System in der dort mit III-III bezeichneten Ebene.

Gleiche Komponenten werden in den Zeichnungen durchgängig mit gleichen Bezugszeichen bezeichnet.

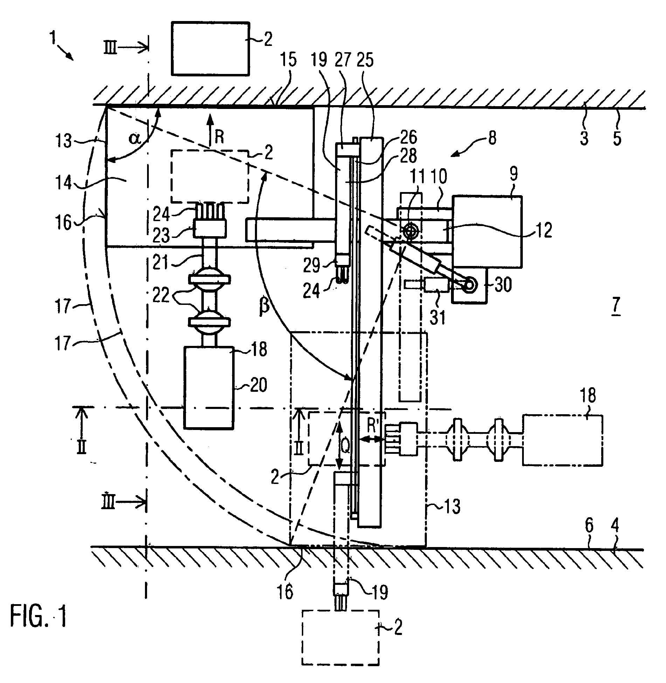

Fig. 1 zeigt einen Ausschnitt eines erfindungsgemäßen Lagersystems 1 zum Lagern von Waren 2. Das Lagersystem 1 verfügt über zumindest eine erste Lagerfläche 3 und eine zweite Lagerfläche 4, auf denen Waren 2 abgelegt und gelagert werden können. Exemplarisch ist hier eine quaderförmige Ware 2 dargestellt, beispielsweise eine quaderförmige Verpackung, die auf der ersten Lagerfläche 3 abgelegt ist. Die erste Lagerfläche 3 hat eine Lagerflächenflanke 5; die zweite Lagerfläche 4 hat eine entsprechende Lagerflächenflanke 6.

Die beiden Lagerflächenflanken 5, 6 sind auf derselben vertikalen Höhe angeordnet, und sie sind beabstandet und parallel zueinander angeordnet. Auf diese Weise formen sie zwischen sich einen Gang 7. Denkbar ist es, dass eine Vielzahl solcher Lagerflächen 3, 4 vertikal übereinander angeordnet sind. Gegebenenfalls könnte mindestens eine dieser Lagerflächen auch durch ein Fördermittel ersetzt sein, beispielsweise ein Förderband, mittels dessen Waren transportiert werden können.

Im Gang 7 befindet sich eine erfindungsgemäße Vorrichtung 8 zum Verlagern von Waren 2, insbesondere also zum Ein-, Aus- oder Umlagern von Waren 2 im Lagersystem 1.

Die Vorrichtung 8 verfügt über einen Vertikalträger 9, der mittels eines Schienensystems (nicht dargestellt) in Längsrichtung des Ganges 7 verfahren werden kann. Ein Ausleger 10 ist über ebenfalls nicht dargestellte Mittel so am Vertikalträger 9 befestigt, dass er in Längsrichtung des Vertikalträgers 9 verfahren werden kann, d.h. in Vertikalrichtung. Durch die Kombination der Horizontalbewegung des Vertikalträgers 9 und der Vertikalbewegung des Auslegers 10 kann die erfindungsgemäße Verlagerungsvorrichtung 8 beliebige Positionen innerhalb des Ganges 7 annehmen.

Über eine vertikale Schwenkachse 11 ist ein Schwenkarm 12 schwenkbar mit dem Ausleger 10 verbunden. An dem vom Vertikalträger 9 abgewandten Ende des Schwenkarms 12 ist ein Tisch 13 befestigt, der zur Ablage von Waren 2 eine horizontal ausgerichtete Auflage-Ebene 14 bietet. Mit gestrichelten Linien ist eine auf der Auflage-Ebene 14 des Tisches 13 abgelegte Ware 2 dargestellt.

In der Draufsicht hat der in Fig. 1 gezeigte Tisch 13 eine rechteckige Form. Damit verfügt er insbesondere über eine erste Tischkante 15 und über eine zweite Tischkante 16. Diese beiden Tischkanten 15, 16 schließen zwischen sich einen Winkel α ein, der im Ausführungsbeispiel gemäß Fig. 1 wegen der Rechteckform des Tisches 90° beträgt. Denkbar wären jedoch auch Tische, bei denen der Winkel α zwischen den beiden Tischkanten 15, 16 ungleich 90° ist, wobei der Winkel α einen Wert zwischen 40° und 140° haben kann.

Bei seiner Schwenkbewegung um die Schwenkachse 11 kann der Tisch 13 zwei Endstellungen annehmen. In seiner ersten Endstellung ist der Tisch 13 in Fig. 1 mit durchgezogenen Linien gezeichnet, während er in seiner zweiten Endstellung mit gestrichelten Linien gezeichnet ist. In der ersten Endstellung des Tisches 13 liegt die erste Tischkante 15 parallel und nahezu bündig an der Lagerflächenflanke 5 der ersten Lagerfläche 3 an. Auch in vertikaler Richtung fluchten die erste Lagerfläche 3 und die Auflage-Ebene 14 des Tisches 13 miteinander. Dies ermöglicht es, eine Ware 2 ohne Höhenversatz vom Tisch 13 auf die erste Lagerfläche 3 zu bewegen oder umgekehrt.

Von dieser ersten Endstellung kann der Tisch 13 um die Schwenkachse 11 um einen maximalen Schwenkwinkel β bis in seine gestrichelt dargestellte, zweite Endstellung verschwenkt werden. Bis auf eine maximale Abweichung von wenigen Grad entspricht der maximale Schwenkwinkel β genau dem zwischen den beiden Tischkanten 15 ,16 eingenommenen Tischkantenwinkel α. Mit gestrichelten Linien ist in Fig. 1 dargestellt, auf welchen Bahnen 17 sich zwei Ecken des Tisches 13 während seiner Schwenkbewegung bewegen. In seiner zweiten Endstellung liegt der Tisch 13 so, dass seine zweite Tischkante 16 parallel zu der und kurz vor der Flanke 6 der zweiten Lagerfläche 4 liegt. Auch in dieser Stellung liegen die Auflage-Ebene 14 und die zweite Lagerfläche 4 wieder in einer gemeinsamen vertikalen Position. Folglich kann in dieser zweiten Endstellung des Tisches 13 eine auf dem Tisch 13 befindliche Ware 2 auf die zweite Lagerfläche 4 bewegt oder von dort auf den Tisch 13 übernommen werden.

Dass die Tischkanten 15, 16 in den beiden Endstellungen des Tisches 13 bündig an den ihnen jeweils zugeordneten Lagerflächenflanken 5, 6 anliegen, wird durch geeignete Dimensionierung der Vorrichtung 8 erreicht, insbesondere durch die Anordnung der Schwenkachse 11 in Bezug auf den Tisch 13 in Abhängigkeit von der Breite des Ganges 7.

Zum eigentlichen Verlagern der Waren 2 verfügt die Vorrichtung 8 über zwei Verlagerungseinrichtungen 18, 19, die im vorliegenden Ausführungsbeispiel als Saug-Schieber ausgebildet sind. Die erste Verlagerungseinrichtung 18 ist so an der Vorrichtung 8 befestigt, dass sie an der Schwenkbewegung des Tisches 13 teilnimmt bzw. an diese Schwenkbewegung gekoppelt ist. Folglich ist sie mit durchgezogenen Linien in der ersten Endstellung des Tisches 13 und mit gestrichelten Linien in der zweiten Endstellung des Tisches 13 dargestellt. Die erste Verlagerungseinrichtung 18 verfügt über ein Gehäuse 20, in dem ein Stahlband 21 aufgewickelt ist. Außerhalb des Gehäuses 20 ist das Stahlband 21 nacheinander über zwei konvexe Rollen 22 geführt. Die Rollen 22 sorgen dafür, dass das Stahlband 21 auf der vom Gehäuse 20 abgewandten Seite in seiner Querrichtung gekrümmt ist, während es in dem Gehäuse 20 in flacher Form aufgewickelt werden kann. An dem vom Gehäuse 20 abgewandten Ende ist das Stahlband 21 mit einem Kopf 23 der Verlagerungseinrichtung 18 verbunden. Dieser Einrichtungskopf 23 weist auf seiner Vorderseite 3 als Saugnäpfe ausgebildete Saugöffnungen 24 auf. Mittels einer nicht dargestellten Pneumatik kann an den Saugöffnungen 24 ein Unterdruck hergestellt werden, der eine vor dem Einrichtungskopf 23 befindliche Ware 2 ansaugt. Durch den an den Saugöffnungen 24 herrschenden Unterdruck wird die Ware 2 fest vor dem Einrichtungskopf 23 gehalten.

Wird das Stahlband 21 über die Rollen 22 aus dem Gehäuse 20 abgewickelt, so verschiebt sich der Kopf 23 der Verlagerungseinrichtung 18 vom Gehäuse weg in einer Verlagerungsrichtung R. Bei dieser Bewegung wird auch eine vor dem Kopf 23 befindliche Ware 2 in der Richtung R verlagert, wobei sie vom Tisch 13 auf die erste Lagerfläche 3 verlagert werden kann. Bei dieser Bewegung wird die Ware 2 vom Einrichtungskopf 23 geschoben. Umgekehrt kann eine auf der ersten Lagerfläche 3 befindliche Ware 2 von dem an sie herangefahrenen Einrichtungskopf 23 angesaugt werden. Wird das Stahlband 21 dann in das Gehäuse 20 aufgewickelt, so verlagert sich der Einrichtungskopf 23 - und mit ihm die Ware 2 - in der Richtung -R von der ersten Lagerfläche 3 auf den Tisch 13.

Zusätzlich zu der ersten Verlagerungseinrichtung 18 verfügt die Vorrichtung 8 über eine zweite Verlagerungseinrichtung 19. Im Gegensatz zur ersten Verlagerungseinrichtung 18 nimmt die zweite Verlagerungseinrichtung 19 nicht an der Schwenkbewegung des Tisches 13 teil. Nichts desto trotz ist die zweite Verlagerungseinrichtung 19 an die Horizontalbewegung des Vertikalträgers 9 und an die Vertikalbewegung des Auslegers 10 und des Tisches 13 gekoppelt.

Die zweite Verlagerungseinrichtung 19 verfügt über einen Horizontalträger 25. Parallel zu dem Horizontalträger 25 ist an ihm eine Schiene 26 befestigt, die auch als einfache Stange ausgebildet sein kann. Ein Reiter 27 ist entlang der Längsrichtung der Schiene 26 beweglich. An dem Reiter 27 ist wiederum ein Arm 28 befestigt, der an seinem vorderen Ende einen Kopf 29 der zweiten Verlagerungseinrichtung 19 trägt. Dieser Kopf 29 ist ähnlich aufgebaut wie der Kopf 23 der ersten Verlagerungseinrichtung 18. Auch der Einrichtungskopf 29 der zweiten Verlagerungseinrichtung 19 verfügt über Saugöffnungen 24, an denen durch eine nicht dargestellte Pneumatik ein Unterdruck hergestellt werden kann.

Die Verlagerungsrichtung Q, in der die zweite Verlagerungseinrichtung 19 wirksam ist, ist parallel zu der Schiene 26 und zum Horizontalträger 25 und wird daher durch die Ausrichtung dieser beiden Elemente bestimmt. In der ersten Endstellung des Tisches führt die Verlagerungsrichtung Q der zweiten Verlagerungseinrichtung 19 nicht über den Tisch 13 und kann somit nicht zum Verlagern von Waren 2 dienen. In der gestrichelt dargestellten zweiten Endstellung des Tisches 13 führt die Verlagerungsrichtung Q der zweiten Verlagerungseinrichtung 19 jedoch genau über den Tisch 13. Dort kreuzt sie sich im rechten Winkel mit der Verlagerungsrichtung R' der ersten Verlagerungseinrichtung 18, die an der Schwenkbewegung des Tisches 13 teilgenommen hat. In der Verlagerungsrichtung Q kann die zweite Verlagerungseinrichtung 19 soweit verschoben werden, dass eine vor ihrem Kopf 29 befindliche Ware 2 auf die zweite Lagerfläche 4 geschoben oder dort ergriffen und zurück auf den Tisch 13 gezogen werden kann.

Um die Schwenkbewegung des Tisches 13 zu bewirken, ist an einem Seitenausleger 30 des Vertikalträgers 9 eine Teleskopmechanik 31 befestigt, die an ihrem anderen Ende am Schwenkarm 12 des Schwenktisches 13 befestigt ist. Durch ein gesteuertes Verkürzen oder Verlängern der Teleskopmechanik 31 wird der Schwenkarm 12 zwischen seinen beiden Endstellungen verschwenkt, wobei er den Tisch 13 mitnimmt.

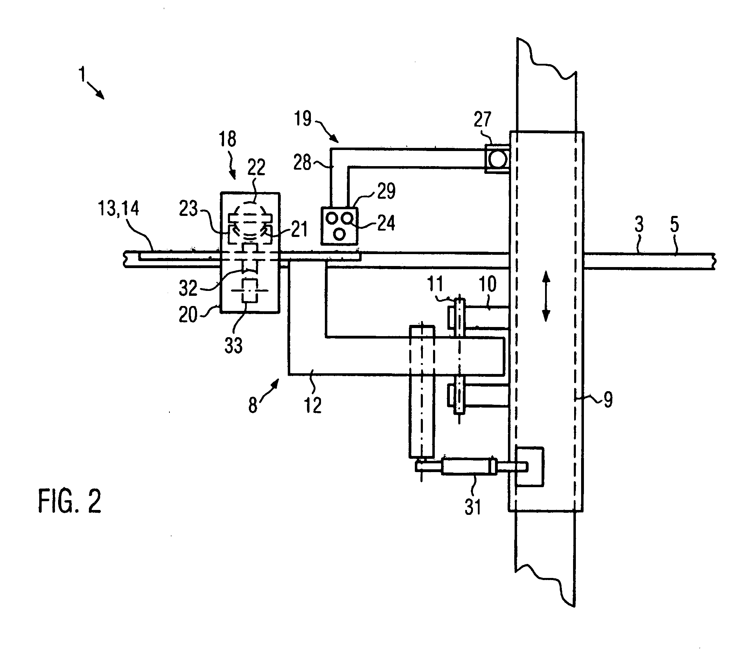

Fig. 2 zeigt das in Fig. 1 dargestellte Lagersystem in der dort mit II-II bezeichneten Schnittebene. Hier ist zu sehen, dass die Auflage-Ebene 14 des Tisches 13 auf derselben Höhe liegt wie die erste Lagerfläche 3. Knapp oberhalb dieser Ebene befinden sich die Köpfe 23, 29 der ersten Verlagerungseinrichtung 18 und der zweiten Verlagerungseinrichtung 19, um eine auf dem Tisch befindliche Ware ergreifen und verlagern zu können. Das am Kopf 23 der ersten Verlagerungseinrichtung 28 befestigte Stahlband 21 ist nicht allein über eine konvexe Rolle 22 geführt, sondern zwischen der konvexen Rolle 22 und einer konkaven Gegenrolle 32 eingezwängt, um die dargestellte gekrümmte Form zu erhalten. In dieser gekrümmten Form ist das Stahlband 21 auch in seiner ausgefahrenen Position der Richtung beständig, da es sich kaum nach rechts oder links und nur äußerst geringfügig nach unten verbiegen lässt. Auch über längere Verlagerungsstrecken behält das Stahlband 21 daher seine Richtung in der Verlagerungsrichtung R, R' bei. Im Gehäuse 20 der ersten Verlagerungseinrichtung 18 befindet sich eine Aufwickelvorrichtung 33, auf die das Stahlband 21 in flacher Form aufgewickelt werden kann.

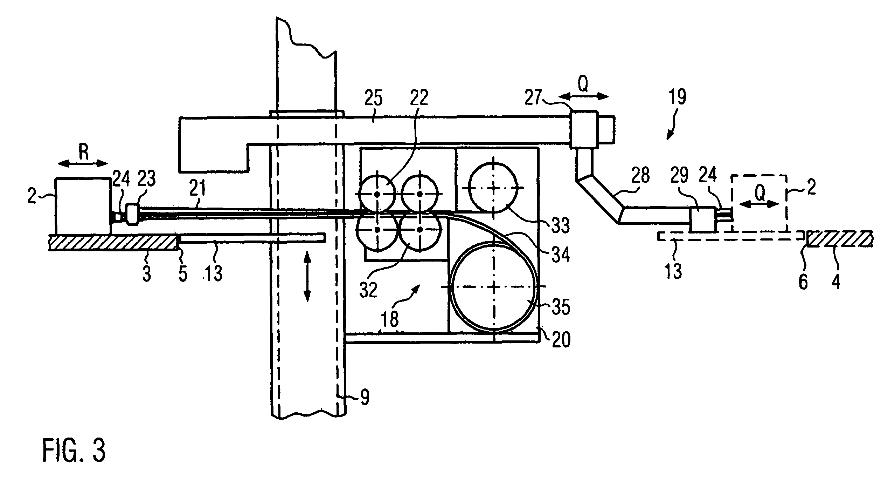

Fig. 3 zeigt das in Fig. 1 gezeigte Lagersystem 1 in der dort mit III-III bezeichneten Schnittebene. Zu sehen ist hier, dass der Tisch 13 in der links dargestellten, ersten Endstellung horizontal bündig und kurz vor der Flanke 5 der ersten Lagerfläche 3 liegt. In der rechts dargestellten, zweiten Endstellung liegt der Tisch 13 bündig mit der zweiten Lagerfläche 4 kurz vor deren Flanke 6. Eine Ware 2 kann daher zwischen dem Tisch 13 und der Lagerfläche 3, 4 verlagert werden, ohne eine Höhendifferenz überwinden zu müssen.

An der ersten Verlagerungseinrichtung 18 ist nun auch eine Luftleitung 34 dargestellt, die - ebenso wie das Stahlband 21 - an den Einrichtungskopf 23 angeschlossen ist. Sie steht dort mit den Saugöffnungen 24 in Wirkverbindung. Über die Luftleitung 34 kann Luft angesaugt werden, um an den Saugöffnungen 24 einen Unterdruck zu erzeugen und eine Ware 2 auf diese Weise sicher vor dem Einrichtungskopf 23 zu halten. Innerhalb des Gehäuses 20 befindet sich nicht nur eine Aufwickelvorrichtung 33 für das Stahlband 21, sondern auch eine zweite Aufwickelvorrichtung 35 zum Auf- und Abwickeln der Luftleitung bzw. des Pneumatik-Schlauches 34. Die beiden Aufwickelvorrichtungen 33, 35 können leicht in Aufwickelvorrichtung vorgespannt sein. Unter der Einwirkung der Rollen 22 und der Gegenrollen 32 auf das Stahlband 21 bewegt sich der Einrichtungskopf 23 relativ zum Tisch 13 bzw. relativ zum Gehäuse 20. Bei dieser Bewegung führt er die Luftleitung 34 mit.

Der Betrieb des Lagersystems 1 und der Verlagerungsvorrichtung 8 erfolgt folgendermaßen: Zum Einlagern einer Ware 2 in das Lagersystem 1 wird diese Ware 2 entweder direkt auf den Tisch 13 deponiert oder mittels der Verlagerungsvorrichtung 8 an irgendeiner Stelle des Lagersystems 1 ergriffen und selbsttätig auf den Tisch 13 bewegt. Dafür kann die Ware 2 beispielsweise mittels einer geeigneten Fördereinrichtung an eine Stelle gebracht werden, an der sie durch die Verlagerungsvorrichtung 8 ergriffen werden kann. Dazu wird die Verlagerungsvorrichtung 8 so verfahren, dass die Ware sich in Verlängerung der Verlagerungsrichtung R der ersten Verlagerungseinrichtung 18 befindet. Der Kopf 23 dieser Einrichtung 18 wird so verfahren, dass die Saugöffnungen 24 an der Ware 2 anliegen. Sobald ein Unterdruck erzeugt wird, fixiert dieser die Ware 2 vor dem Einrichtungskopf 23. Wird der Einrichtungskopf 23 mittels des Stahlbandes 21 in der Richtung -R zurückgezogen, so folgt die Ware 2 dem Kopf 23 und verlagert sich so auf die Auflage-Ebene 14 des Tisches 13. Durch horizontales Verfahren des Vertikalträgers 9 und vertikales Verfahren des Auslegers 10 kann der Tisch 13 an jede beliebige Stelle der ersten Lagerfläche 3 bzw. darüber oder darunter angeordneter, entsprechender Lagerflächen des Lagersystems 1 gebracht werden. Wird der Kopf 23 der Verlagerungseinrichtung 18 nun in Richtung R verfahren, so verschiebt er die Ware 2 auf die erste Lagerfläche 3.

Soll die auf dem Tisch befindliche Ware 2 hingegen auf die zweite Lagerfläche 4 gebracht werden, so verfährt der Vertikalträger 9 zunächst solange, bis der Tisch 13 an einer geeigneten Position innerhalb des Ganges 7 angelangt ist. Gleichzeitig oder auch anschließend an diese Bewegung wird der Tisch 13 mittels entsprechender Ansteuerung der Teleskopmechanik 31 um den Schwenkwinkel β in seine zweite Endstellung verschwenkt. In dieser Endstellung liegt der Tisch bündig an der Flanke 6 der zweiten Lagerfläche 4 an. Während des Schwenkens kann der mittels der Saugöffnungen 24 der ersten Verlagerungseinrichtung 18 erzeugte Unterdruck optional erhalten bleiben, um die Ware 2 während des Schwenkens festzuhalten und so zu verhindern, dass sie vom Tisch 13 herabfällt.

In der zweiten Endstellung des Tisches 13 liegt die Ware in Verlängerung der Verlagerungsrichtung Q der zweiten Verlagerungseinrichtung 19. Diese wird entlang der Schiene 26 solange verfahren, bis die Saugöffnungen 24 ihres Kopfes 29 an der Ware 2 anliegen. Nun wird die Pneumatik der ersten Verlagerungseinrichtung 18 ausgeschaltet, so dass die Ware 2 nicht länger von der ersten Verlagerungseinrichtung 18 angesaugt bleibt. Die Pneumatik der zweiten Verlagerungseinrichtung 19 wird hingegen aktiviert, so dass die Ware nun am Kopf 29 der zweiten Verlagerungseinrichtung 19 angesaugt und fixiert wird. Anschließend verschiebt sich die zweite Verlagerungseinrichtung 19 in der Verlagerungsrichtung Q, wodurch sie die Ware 2 auf die zweite Lagerfläche 4 verlagert.

Die geschilderten Verfahrensschritte können in ihrer Reihenfolge so abgewandelt werden, dass im Lagersystem 1 befindliche Waren 2 auch um- oder ausgelagert werden können. Dabei werden sie mittels einer der beiden Verlagerungseinrichtungen 18, 19 an einer Lagerposition auf der ersten oder der zweiten Lagerfläche 3, 4 ergriffen, auf den Tisch 13 bewegt und anschließend entweder an eine andere Stelle innerhalb des Lagersystems 1 oder an eine Auslagerstelle (nicht dargestellt) gebracht und dort wieder abgelegt oder ausgelagert. Zur Überwachung und zur Steuerung der Verlagerungsvorgänge ist zweckmäßigerweise eine entsprechende Steuereinheit vorgesehen, die auch die Art und die Position der im System 1 abgelegten Waren speichert.

Ausgehend von dem dargestellten Ausführungsbeispiel kann die Erfindung in vielfacher Weise abgewandelt werden. Beispielsweise kann die Form des Tisches verändert werden, insbesondere der Winkel α zwischen den beiden Tischkanten 15, 16. Entsprechend ändert sich dann auch der Schwenkwinkel β zwischen den beiden Endstellungen des Tisches 13. Statt der Saug-Schieber können als Verlagerungseinrichtungen 18, 19 auch Einrichtungen zum Saugen und Greifen verwendet werden.

## Patentansprüche

1. Vorrichtung (8) für ein Verlagern von Waren (2), mit einem eine Auflage-Ebene (14) für eine Ware (2) aufweisenden Tisch (12), der mindestens eine erste Tischkante (15) und eine zweite Tischkante (16) aufweist, die zwischen sich einen Winkel (α) einnehmen, wobei der Tisch (13) ferner um eine senkrecht zur Auflage-Ebene (14) ausgerichtete Schwenkachse (11) zwischen einer ersten Endstellung und einer zweiten Endstellung schwenkbar ist, und wobei der Schwenkwinkel (β) zwischen den beiden Endstellungen des Tisches (13) etwa so groß ist wie der zwischen den beiden Tischkanten (15, 16) eingenommene, Winkel (α),
**dadurch gekennzeichnet,**
**dass** eine Verlagerungseinrichtung (19) zum verlagern einer Ware (2) vorgesehen ist, die von der Schwenkbewegung des Tisches (13) unabhängig ist.

2. Vorrichtung nach Anspruch 1, **dadurch gekennzeichnet, dass** der Winkel (α) zwischen den beiden Tischkanten (15, 16) und der Schwenkwinkel (β) zwischen den beiden Endstellungen des Tisches (13) jeweils etwa 90° betragen.

3. Vorrichtung nach einem der vorangehenden Ansprüche, **dadurch gekennzeichnet, dass** der Tisch (13) eine im Wesentlichen rechteckige Form hat.

4. Vorrichtung nach einem der vorangehenden Ansprüche, **dadurch gekennzeichnet, dass** die Schwenkachse (11) am Rand des Tisches (13) oder außerhalb des Tisches (13) angeordnet ist.

5. Vorrichtung nach einem der vorangehenden Ansprüche, **dadurch gekennzeichnet, dass** die Schwenkachse (11) nahe oder in einer Ecke des Tisches (13) angeordnet ist.

6. Vorrichtung nach einem der vorangehenden Ansprüche, **dadurch gekennzeichnet, dass** eine zusätzliche Verlagerungseinrichtung (18) vorgesehen ist, die an die Schwenkbewegung des Tisches (13) gekoppelt ist.

7. Vorrichtung nach einem der vorangehenden Ansprüche, **dadurch gekennzeichnet, dass** sie zwei Verlagerungseinrichtungen (18, 19) zum Verlagern einer Ware (2) aufweist, wobei jede Verlagerungseinrichtung (18, 19) einen Einrichtungskopf (23, 29) aufweist, vor dem eine Ware (2) auf dem Tisch (13) positionierbar ist.

8. Vorrichtung nach Anspruch 7, **dadurch gekennzeichnet, dass** jede Verlagerungseinrichtung (18, 19) eine Verlagerungsrichtung (R, R', Q) aufweist, in der ihr Einrichtungskopf (23, 29) bewegbar ist.

9. Vorrichtung nach einem der vorangehenden Ansprüche, **dadurch gekennzeichnet, dass** mindestens eine Verlagerungseinrichtung (18, 19) eine Ansaugvorrichtung (24) zum Ansaugen einer Ware (2) aufweist.

10. Vorrichtung nach einem der Ansprüche 6 bis 8, **dadurch gekennzeichnet, dass** sich die Verlagerungsrichtungen (R', Q) von zwei Verlagerungseinrichtungen (18, 19) in einer Endstellung des Tisches (13) über dem Tisch (13) kreuzen.

11. Lagersystem (1) zum Lagern von Waren, **dadurch gekennzeichnet, dass** wenigstens eine Vorrichtung (8) nach einem der vorangehenden Ansprüche und wenigstens eine Lagerfläche (3, 4) zum Lagern von Waren (2) vorgesehen sind.

12. Lagersystem zum Lagern von Waren nach Anspruch 11, **dadurch gekennzeichnet, dass** wenigstens zwei Lagerflächen (3, 4) mit parallel zueinander ausgerichteten Lagerflächenflanken (5, 6) vorgesehen ist, und dass der Tisch (13) der Vorrichtung (8) in seiner ersten Endstellung etwa bündig mit der Flanke (5) der einen Lagerfläche (3) und in seiner zweiten Endstellung etwa bündig mit der Flanke (6) der anderen Lagerfläche (4) positioniert ist.

13. Verfahren zum Betreiben eines Lagersystems (1) zum Lagern von Waren mit einer Vorrichtung (8) nach einem der Ansprüche 1 bis 10, wobei eine auf dem Tisch (13) befindliche Ware (2) während einer Schwenkbewegung des Tisches (13) von einer gemeinsam mit dem Tisch verschwenkenden Verlagerungseinrichtung (18) festgehalten, anschließend losgelassen und mittels der Verlagerungseinrichtung (19) verlagert wird, die von der Schwenkbewegung des Tisches (13) unabhängig ist.

## Claims

1. Device (8) for displacing articles (2), with a table (12) having a support plane (14) for an article (2) and having at least a first table edge (15) and a second table edge (16), which assume an angle (α) between them, wherein the table (13) further is pivotable about a pivot axis (11) aligned perpendicular to the support plane (14) between a first end position and a second end position, and wherein the pivot angle (β) between the two end positions of the table (13) is approximately as great as the angle (α) assumed between the two table edges (15, 16),
**characterised in that**
a displacement assembly (19) for displacing an article (2) is provided, which is independent of the pivot movement of the table (13).

2. Device according to Claim 1, **characterised in that** the angle (α) between the two table edges (15, 16) and the pivot angle (β) between the two end positions of the table (13) are each approximately 90°.

3. Device according to any one of the preceding claims, **characterised in that** the table (13) has a substantially rectangular form.

4. Device according to any one of the preceding claims, **characterised in that** the pivot axis (11) is arranged at the rim of the table (13) or outside the table (13).

5. Device according to any one of the preceding claims, **characterised in that** the pivot axis (11) is arranged near or in a corner of the table (13).

6. Device according to any one of the preceding claims, **characterised in that** an additional displacement assembly (18) is provided, which is coupled to the pivot movement of the table (13).

7. Device according to any one of the preceding claims, **characterised in that** it has two displacement assemblies (18) for displacing an article (2), wherein each displacement assembly (18) has an assembly head (23, 29), upstream of which an article (2) can be positioned on the table (13).

8. Device according to Claim 7, **characterised in that** each displacement assembly (18, 19) has a displacement direction (R, R', Q), in which its assembly head (23, 29) is movable.

9. Device according to any one of the preceding claims, **characterised in that** at least one displacement assembly (18, 19) has a suction device (24) for suctioning an article (2).

10. Device according to any one of Claims 6 to 8, **characterised in that** the displacement directions (R', Q) of two displacement assemblies (18, 19) intersect in an end position of the table (13) above the table (13).

11. Storage system (1) for storing articles, **characterised in that** at least one device (8) according to any one of the preceding claims and at least one storage surface (3, 4) for storing articles (2) are provided.

12. Storage system for storing articles according to Claim 11, **characterised in that** at least two storage surfaces (3, 4) are provided with storage surface flanks (5, 6) aligned parallel to each other, and **in that** the table (13) of the device (8) is positioned in its first end position approximately flush with the flank (5) of one storage surface (3) and in its second end position approximately flush with the flank (6) of the other storage surface (4).

13. Method for operating a storage system (1) for storing articles with a device (8) according to any one of Claims 1 to 10, wherein an article (2) located on the table (3) during a pivot movement of the table (13) is held firm by a displacement assembly (18) pivoting together with the table, then released and displaced by means of the displacement assembly (19), which is independent of the pivot movement of the table (13).

## Revendications

1. Dispositif (8) pour un transfert d'articles (2), avec une table (12) qui comporte un plan d'appui (14) pour un article (2) et qui présente au moins un premier bord (15) et un second bord (16) qui définissent un angle (α), la table (13) étant par ailleurs apte à pivoter sur un axe de pivotement (11) perpendiculaire au plan d'appui (14), entre une première position de fin de course et une seconde position de fin de course, et l'angle de pivotement (β) entre les deux positions de fin de course de la table (13) étant à peu près aussi grand que l'angle (α) défini entre les deux bords (15, 16) de la table,
**caractérisé en ce qu'**il est prévu un dispositif de transfert (19) qui est destiné à transférer un article (2) et qui est indépendant du mouvement pivotant de la table (13) .

2. Dispositif selon la revendication 1, **caractérisé en ce que** l'angle (α) entre les deux bords (15, 16) de la table et l'angle de pivotement (β) entre les deux positions de fin de course de la table (13) sont d'environ 90° chacun.

3. Dispositif selon l'une des revendications précédentes, **caractérisé en ce que** la table (13) a globalement une forme rectangulaire.

4. Dispositif selon l'une des revendications précédentes, **caractérisé en ce que** l'axe de pivotement (11) est disposé au bord de la table (13) ou à l'extérieur de la table (13).

5. Dispositif selon l'une des revendications précédentes, **caractérisé en ce que** l'axe de pivotement (11) est disposé près d'un coin de la table (13) ou dans ce coin.

6. Dispositif selon l'une des revendications précédentes, **caractérisé en ce qu'**il est prévu un dispositif de transfert supplémentaire (18) qui est accouplé au mouvement pivotant de la table (13).

7. Dispositif selon l'une des revendications précédentes, **caractérisé en ce qu'**il comporte deux dispositifs de transfert (18, 19) pour le transfert d'un article (2), chaque dispositif de transfert (18, 19) comportant une tête (23, 29) grâce à laquelle un article (2) est apte à être positionné sur la table (13).

8. Dispositif selon la revendication 7, **caractérisé en ce que** chaque dispositif de transfert (18, 19) présente une direction de transfert (R, R', Q) dans laquelle sa tête (23, 29) est apte à être déplacée.

9. Dispositif selon l'une des revendications précédentes, **caractérisé en ce qu'**au moins un dispositif de transfert (18, 19) comporte un dispositif d'aspiration (24) pour aspirer un article (2).

10. Dispositif selon l'une des revendications 6 à 8, **caractérisé en ce que** les directions de transfert (R', Q) de deux dispositifs de transfert (18, 19) se croisent au-dessus de la table (13), dans une position de fin de course de celle-ci.

11. Système de stockage (1) pour stocker des articles, **caractérisé en ce qu'**il est prévu au moins un dispositif (8) selon l'une des revendications précédentes et au moins une surface de stockage (3, 4) pour stocker des articles (2).

12. Système de stockage pour le stockage d'articles selon la revendication 11, **caractérisé en ce qu'**il est prévu au moins deux surfaces de stockage (3, 4) avec des flancs de surface de stockage (5, 6) parallèles, et **en ce que** la table (13) du dispositif (8), dans sa première position de fin de course, est positionnée à peu près au même niveau que le flanc (5) d'une surface de stockage (3) et, dans sa seconde position de fin de course, est positionnée à peu près au même niveau que le flanc (6) de l'autre surface de stockage (4).

13. Procédé pour faire fonctionner un système de stockage (1) pour le stockage d'articles avec un dispositif (8) selon l'une des revendications 1 à 10, étant précisé qu'un article (2) qui se trouve sur la table (13) est immobilisé, pendant un mouvement pivotant de la table (13), par un dispositif de transfert (18) qui pivote conjointement avec la table, puis est relâché et est transféré à l'aide du dispositif de transfert (19), qui est indépendant du mouvement pivotant de la table (13).
